Europäisches Patentamt

European Patent Office

Office européen des brevets

(11) Veröffentlichungsnummer: **0 518 248 A1**

## EUROPÄISCHE PATENTANMELDUNG

(21) Anmeldenummer: **92109632.7**

(51) Int. Cl.⁵: **A01D 78/12**

(22) Anmeldetag: **09.06.92**

(30) Priorität: **12.06.91 DE 4119315**

(43) Veröffentlichungstag der Anmeldung:
**16.12.92 Patentblatt 92/51**

(84) Benannte Vertragsstaaten:
**DE DK IT NL**

(71) Anmelder: **Alois Pöttinger Maschinenfabrik GmbH**

**A-4710 Grieskirchen(AT)**

(72) Erfinder: **Leposa, Wolfgang**
**Sonnfeldstrasse 17**
**A-4710 Grieskirchen(AT)**

(74) Vertreter: **Dupal, Helmut, Dipl-Ing.**
**Jägerweg 12**
**A-4702 Wallern(AT)**

(54) **Heuwerbungsmaschine.**

(57) Heuwerbungsmaschine, insbesonders zum Schwaden, mit wenigstens einem Rechrad (4), das auf einer aufrechten, am Maschinenrahmen (1) gestellfesten Rechradachse (2) drehend antreibbar gelagert ist und mit mehreren in Traglagern (7) gelagerten, mit einer Steuerungsvorrichtung (8) um ihre Längsachse (9) verdrehbaren Zinkentragarmen (6,6'..6ⁿ). Die Traglager (7) sind an der Unterseite des Rechradtellers (10) in einer Lage zwischen radialer und tangentialer Ausrichtung verschweißt. Das Rechradteller (10) ist an der Rechradnabe (3) und mit dem Außenrand (12) einer darüber angeordneten, abdeckenden Stützhaube (11) verschweißt, die eine zentrale Öffnung (13) für die Rechradnabe (3) und dazwischen konzentrische Bohrungen (14) für eine Verschraubung (23) mit einem Flansch (15) der Rechradnabe (3) aufweist. Am Außenrand (12) der Stützhaube (11) sind Lappen (19) herabgeführt und mit den Traglagern (7) verschweißt.

Fig. 3

# Fig. 2

Die Erfindung betrifft eine Heuwerbungsmaschine, insbesonders zum Schwaden, mit wenigstens einem Rechrad, das auf einer aufrechten, an einem Maschinenrahmen gestellfesten Rechradachse drehend antreibbar gelagert ist, und mit mehreren, in Traglagern gelagerten, nach außen gerichteten Zinkentragarmen versehen ist, die mit einer Steuerungsvorrichtung um ihre Längsachse verdrehbar sind.

Maschinen dieser Art werden zur Steigerung der Arbeitsleistung mit einer immer größer werdenden Anzahl von Zinkentragarmen, mit immer größerem Rechkreisdurchmesser, ausgestattet. Dadurch steigt die Belastung auf den Rechradkörper stark an und überdies wird der Platz für die Anordnung der Traglager der Zinkentragarme immer enger. Aus diesem Grund wurden bereits früher die Zinkentragarme von der Radialrichtung in eine zwischen dieser und der Tangentialrichtung liegenden Ausrichtung angebracht.

Bei Maschinen mit Rechradteller an dem die Traglager angeschraubt waren sind aber die Bauteile bei den hohen, periodisch auftretenden Kräften örtlich stark belastet die Störungen durch Materialverformung oder Zerstörung zur Folge haben können.

Die Erfindung bezweckt die Verbesserung der mechanischen Festigkeit der Rechradanordnung und die Verbesserung der Genauigkeit bei der Anbringung und eine Vereinfachung der Montage der Zinkentraglager.

Diese Aufgabe wird mit den Mitteln des Anspruches 1 gelöst.

Die Unteransprüche, die ebenso wie Anspruch 1 gleichzeitig Bestandteil der Beschreibung sind, betreffen besonders vorteilhafte Ausgestaltungsmerkmale der Erfindung.

Die Anordnung der Traglager auf der Unterseite der Fahne des Rechradtellers erfahren eine umso stärker tangentiale Ausrichtung, je mehr Traglager Platz finden sollen oder je größer der Rechkreisdurchmesser ist, d.h. je größer die mechanische Belastung ist, weil dadurch die Traglager über eine größere Kantenlänge der Traglagerkörper mit dem Rechradteller verschweißt werden können, wobei nicht nur örtlich sondern über einen größeren Bereich die Verbindung zwischen den belasteten Teilen hergestellt werden kann.

Eine weitere Verbesserung der Befestigung wird durch die Verschweißung der Zinkentraglager mit Teilen des Außenrandes der Stützhaube erzielt und durch die Verschweißung dieser Stützhaube mit dem Außenrand des Rechradtellers.

Durch die Verschweißung des Rechradtellers an der Rechradnabe und der Verschraubung der Stützhaube, sowie deren Verbindung mit dem Rechradteller, wird eine Stützkonstruktion hoher Widerstandsfähigkeit gegen auftretende Kräfte und Kraftänderungen erreicht, wodurch die Ausrichtung der Traglager sich auch unter Belastung wenig ändert.

Eine Steigerung der Steifigkeit der Fahne, auf welcher sich die Tragarme abstützen, durch Einsikkungen nach oben ergibt gleichzeitig den Raum für die Auslenkung der Steuerungsvorrichtung nach oben, so daß die Steuerbahn eng an der Rechradachse geführt werden kann, wodurch sich günstigere Belastungsbedingungen an der Steuerbahn ergeben.

Öffnungen im Stützradteller erleichtern die Verschraubung der Stützhaube am oberen Flansch der Rechradnabe, bei der durch die Verschraubung an dieser Stelle ein Ausgleich für die ansonsten starre Verbindung zwischen Rechradnabe, Rechradteller und Stützhaube geschaffen ist, bevor die Verschraubung angezogen wird.

Die Erfindung wird an Hand einer erfindungsgemäßen Heuwerbungsmaschine näher beschrieben.

Es zeigt :

Fig. 1     die Seitenansicht einer erfindungsgemäßen Heuwerbungsmaschine, schematisch,

Fig. 2     eine Draufsicht auf das Rechrad bei weggelassenen Zinkentragarmen und Rechradachse und Steuerungsvorrichtung und

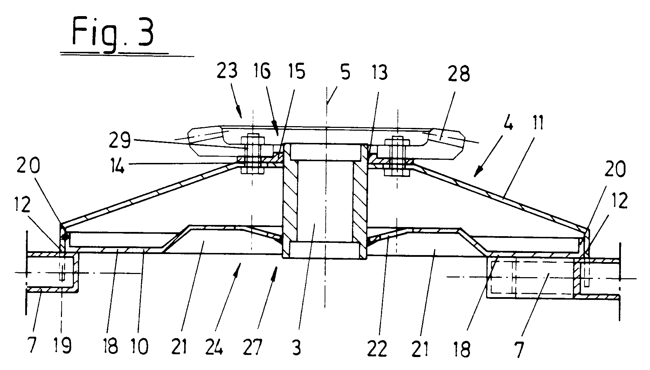

Fig. 3     einen Schnitt durch das Rechrad nach Fig. 2 nach I-I.

Die Heuwerbungsmaschine besteht aus einem Rechrad 4, das auf einer lotrechten, mit dem Maschinenrahmen 1 gestellfest verbundenen Rechradachse 2 drehbar und von einem Antriebsstrang 34 her antreibbar gelagert ist und um die Rotationsachse 5 umläuft.

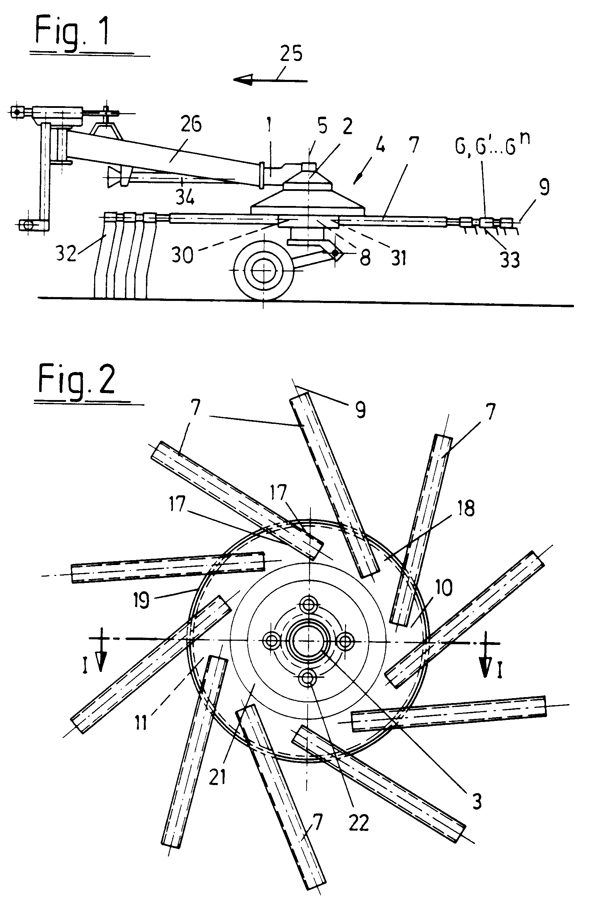

Der Maschinenrahmen 1 ist an einem in Arbeitsrichtung 25 der Maschine verlaufenden Zugbalken 26 befestigt, an dessen vorderem Ende eine Anbau- oder Anhängevorrichtung für den Anschluß an ein Zugfahrzeug angebracht ist. (Fig. 1)

Das Rechrad 4 besteht aus einem Rechradteller 10, das mit einer Rechradnabe 3 an deren unterem Ende 27 verschweißt ist und aus einer darüberliegenden, überdeckenden Stützhaube 11, die eine zentrale Öffnung 13 für die Rechradnabe 3 aufweist und mehrere, konzentrische Bohrungen 14 für die Schraubenbolzen 29 der Verschraubungen 23, mit der die Stützhaube 11 an einem Flansch 15 am oberen Ende 16 der Rechradnabe 3 befestigt ist und mit denen gleichzeitig das Antriebszahnrad 28 des Rechrades 4 angeschraubt ist.

Das Rechradteller 10 besitzt eine ebene, waagrecht ausgerichtete Fahne 18, deren Rand 20 nach oben gebogen ist und mit dem herabgezogenen Außenrand 12 der Stützhaube 11 verschweißt ist.

Zur Versteifung ist das Rechradteller 10 mit einer ringförmigen, nach oben gerichteten Einsikkung 21 versehen, die gleichzeitig Raum 24 für die Auslenkung der darunter angeordneten Steuerbahn 30 gibt, in der Steuerrollen 31 von Zinkentragarmen 6,6'..6ⁿ laufen, mit der diese in Traglagern 7 um ihre Längsachse 9 zwischen einer Rechstellung 32 und einer Ablagestellung 33 während des Umlaufes des Rechrades 4 verdrehen.

Die Traglager 7 der Zinkentragarme 6,6'..6ⁿ sind an der Unterseite des Rechradtellers 10 an der Fahne 18 in einer Lage befestigt, die zwischen einer radialen und einer tangentialen Ausrichtung liegt und mit der Fahne 18 an den beiden anliegenden Längskanten 17 verschweißt.

Die Traglager 7 überragen die Fahne 18 des Rechradtellers 10 nach außen sehr erheblich und sind zur besseren Halterung mit zwischen den einzelnen Traglagern 7 herablaufenden Lappen 19 des Außenrandes 12 der Stützhaube 11 verschweißt.

Durch die ausschließliche Schweißverbindung zwischen Traglager 7 und dem Rechradteller 10 und der Stützhaube 11 ist es möglich die genaue Ausrichtung der Traglager 7 senkrecht zur Rotationsachse 5 des Rechrades 4 und in ihrer Richtung nach außen herzustellen und die Verbindung der Teile ohne besonderen Handhabungsaufwand bei gleichzeitiger Gewichtseinsparung sehr genau vorzunehmen.

Legende :

| | |
|---|---|
| 1 | Maschinenrahmen |
| 2 | Rechradachse |
| 3 | Rechradnabe |
| 4 | Rechrad |
| 5 | Rotationsachse des Rechrades 4 |
| 6,6'..6ⁿ | Zinkentragarme |
| 7 | Traglager der Zinkentragarme 6,6'..6ⁿ |
| 8 | Steuerungsvorrichtung |
| 9 | Längsachse der Zinkentragarme 6,6'..6ⁿ |
| 10 | Rechradteller |
| 11 | überdeckende Stützhaube |
| 12 | Außenrand der Stützhaube 11 |
| 13 | zentrale Öffnung der Stützhaube 11 |
| 14 | konzentrische Bohrungen im Rechradteller 10 |
| 15 | Flansch der Rechradnabe 3 |
| 16 | oberes Ende der Rechradnabe 3 |
| 17 | Längskanten der Traglager 7 |
| 18 | Fahne des Rechradtellers 10 |
| 19 | Lappen des Außenrandes 12 der Stützhaube 11 |
| 20 | nach oben gebogener Rand des Rechradtellers 10 |
| 21 | ringförmige Einsickung nach oben des Rechradtellers 10 |
| 22 | Öffnung in dem Rechradteller 10 |
| 23 | Verschraubungen der Stützhaube 11 |
| 24 | Raum unter den Einsickungen 21 des Rechradtellers 10 |
| 25 | Arbeitsrichtung der Maschine |
| 26 | Zugbalken |
| 27 | unteres Ende der Rechradnabe 3 |
| 28 | Antriebszahnrad |
| 29 | Schraubenbolzen der Verschraubungen 23 |
| 30 | Steuerbahn |
| 31 | Steuerrollen |
| 32 | Rechstellung der Zinkentragarme 6,6'..6ⁿ |
| 33 | Abladestellung der Zinkentragarme 6,6'..6ⁿ |
| 34 | Antriebsstrang |

**Patentansprüche**

1. Heuwerbungsmaschine, insbesondere zum Schwaden, mit wenigstens einem Rechrad (4), das auf einer aufrechten, an einem Maschinenrahmen (1) gestellfest angebrachten Rechradachse (2) mit einer Rechradnabe (3) abgestützt und drehend antreibbar gelagert ist und mehrere, von der Rotationsachse (5) wegweisende Zinkentragarme (6,6'..6ⁿ) aufweist, welche in Traglagern (7) gelagert sind und unter Einwirkung einer auf der Rechradachse (2) befestigten Steuerungsvorrichtung (8) um ihre Längsvorrichtung (9) verdrehbar sind und die von unten an einem Rechradteller (10) des Rechrades (4) befestigt sind, das seinerseits an der Rechradnabe (3) starr befestigt ist und auf dem die Traglager (7) im Abstand voneinander, in einer Lage zwischen radialer und tangentialer Ausrichtung, mit dem Rechradteller (10) verschweißt sind, der mit dem Außenrand (12) einer überdeckenden Stützhaube (11) verschweißt ist, die mit einer zentralen Öffnung (13) für die Rechradnabe (3) versehen ist, an der konzentrische Bohrungen (14) angebracht sind, mit denen die Stützhaube (11) mit einem Flansch (15) am oberen Ende (16) der Rechradnabe (3) verschraubt ist.

2. Heuwerbungsmaschine nach dem vorhergehenden Anspruch, bei der die Traglager (7) der Zinkentragarme (6,6'..6ⁿ) an zwei Längskanten (17) auf der Fahne (18) des Rechradtellers (10) verschweißt sind.

3. Heuwerbungsmaschine nach einem der vorhergehenden Ansprüche, bei der die Traglager (7) der Zinkentragarme (6,6'..6ⁿ) mit zwischen benachbarten Traglagern (7) herablaufenden Lappen (19) des Außenrandes (19) der Stützhaube (11) verschweißt sind.

4. Heuwerbungsmaschine nach einem der vorhergehenden Ansprüche, bei der das Rechradteller (10) einen nach oben gebogenen Rand (20) aufweist, an dem es mit dem Außenrand (12) der Stützhaube (11) verschweißt ist.

5. Heuwerbungsmaschine nach einem der vorhergehenden Ansprüche, bei der das Rechradteller (10) innerhalb der Fahne (18) wenigstens mit einer nach oben gerichteten, ringförmigen Einsickung (21) zur Versteifung und weiter innen mit Öffnungen (22) für den Zugang zu den Verschraubungen (23) der Stützhaube (3) von unten her versehen ist.

6. Heuwerbungsmaschine nach dem vorhergehenden Anspruch, bei der die Tiefe der Einsickung (21) so gewählt ist, daß Raum (24) für die Auslenkung der Steuerungsvorrichtung (8) nach oben vorhanden wird.

# Fig. 1

# Fig. 2

Fig. 3

| EINSCHLÄGIGE DOKUMENTE | | | EP 92109632.7 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl⁵) | |
| A | AT - B - 290 903 (MASCHINENFABRIK FAHR AG) * Anspruch 1; Fig. 2 * -- | 1 | A 01 D 78/12 | |
| A | AT - B - 298 867 (WILHELM STOLL MASCHINEN- FABRIK GMBH) * Seite 2, Zeile 29ff; Fig. 2 * -- | 1 | | |
| A | AT - B - 303 435 (BUCHER-GUYER AG MASCHINE- FABRIK) * Insbesondere Fig. 4 * -- | 4 | | |
| A | DE - A - 2 018 110 (KUHN FRERES & CIE. SOCIETE EN COMMANDITE SIMPLE) * Seite 3, Zeile 36ff * -- | 4 | | |
| A | US - A - 3 664 105 (STIEFVATER et al.) * Insbesondere Fig. 6 * ---- | 5,6 | RECHERCHIERTE SACHGEBIETE (Int. Cl⁵) A 01 D 78/00 A 01 D 80/00 | |

Der vorliegende Recherchenbericht wurde für alle Patentansprüche erstellt.

| Recherchenort | Abschlußdatum der Recherche | Prüfer |
|---|---|---|
| WIEN | 01-09-1992 | SCHNEEMANN |